# EUROPEAN PATENT APPLICATION

(11) **EP 4 744 972 A1**
(43) Date of publication of application: **20.05.2026**
(21) Application number: 25209784.5
(22) Date of filing: 20.10.2025
(51) Int. Cl.: B60R 25/04, B60R 25/24, B60R 25/20, B60R 25/00, G07C 9/00, B60R 25/25

(54) **ELECTRONIC KEY SYSTEM FOR VEHICLE**

(30) Priority: 14.11.2024 JP 2024198932
(71) Applicant: Suzuki Motor Corporation, Shizuoka 432-8611 (JP)
(72) Inventor: NAKAO, Taichi, HAMAMATSU-SHI, 432-8611 (JP); SUNDA, Takashi, HAMAMATSU-SHI, 432-8611 (JP); KASUYA, Tomohiro, HAMAMATSU-SHI, 432-8611 (JP)
(74) Representative: Plasseraud IP

(57) **Abstract**

An electronic key system 1 includes a mobile terminal M that outputs a key operation signal corresponding with a key permission of a digital key, and a controller 101 that controls an operation of an electric component provided in a vehicle based on an instruction of the key operation signal. The mobile terminal M has a screen region set to receive an operation by an occupant and display an operation button that prompts output of the key operation signal from the mobile terminal M. The display in the screen region varies between when the mobile terminal M is located in a first area (start area A2) within a first distance r2 from the vehicle and when the mobile terminal M is located outside of the first area (S113), and the operation button is displayed in the screen region when the mobile terminal M is located in the first area (S119).

## Description

### BACKGROUND OF THE INVENTION

### Field of the Invention

The present invention relates to an electronic key system for a vehicle.

### Description of the Related Art

There is a technique of displaying a button for locking and unlocking a door of a vehicle on a screen of a smartphone assigned with a digital key and locking or unlocking the door in response to an operation of the button by an occupant.

### Citation List

### Patent Literature

Patent Literature 1: Japanese Patent No. 6001176

### SUMMARY OF THE INVENTION

The law demands that the immobilizer function must not be released with a smartphone at a predetermined distance or more from the vehicle. Thus, it is desirable that the user of the smartphone, that is, the occupant of the vehicle, can easily recognize whether the smartphone is at a distance where the immobilizer function can be released with the smartphone.

In view of such circumstances, an object of the present invention is to provide an electronic key system for a vehicle that allows an occupant to easily determine whether a mobile terminal serving as a digital key can perform an operation based on a permission granted to the digital key and contributes to improvement of the usability of the digital key.

To attain the object described above, an electronic key system for a vehicle according to one aspect of the present invention includes a mobile terminal that outputs a key operation signal corresponding with a key permission of a digital key, and a controller that controls an operation of an electric component provided in the vehicle based on an instruction of the key operation signal.

In this aspect, the mobile terminal is configured to have a screen region capable of receiving an operation by an occupant and displaying an operation button that prompts output of the key operation signal from the mobile terminal, differentiate a display in the screen region between when the mobile terminal is located in a first area within a first distance from the vehicle and when the mobile terminal is located outside of the first area, and display the operation button in the screen region when the mobile terminal is located in the first area.

The mobile terminal may be configured to cease displaying the operation button in the screen region when the mobile terminal is located outside of the first area.

The electric component may be an electric component involved with turning on and off of a power supply provided in the vehicle.

The controller may be configured to start the vehicle in response to the power supply being turned on.

The mobile terminal may be configured to display a first operation button and a second operation button as the operation button.

The first operation button may be an operation button that prompts output of a key operation signal concerning turning on and off of a power supply provided in the vehicle.

The second operation button may be an operation button that prompts output of a key operation signal concerning an operation of the electric component other than the power supply.

The mobile terminal may be configured to switch the display in the screen region between when the mobile terminal is located in the first area and when the mobile terminal is located in a second area that is outside of the first area and within a second distance greater than the first distance from the vehicle.

The mobile terminal may be configured to display both the first operation button and the second operation button when the mobile terminal is located in the first area, and display only the second operation button of the first operation button and the second operation button when the mobile terminal is located in the second area.

The mobile terminal may be configured to switch display of the screen region including the second operation button to a foreground when the mobile terminal moves from outside the second area into the second area.

The electric component other than the power supply may include a door lock actuator involved with locking or unlocking of a door of the vehicle.

The mobile terminal may be configured to become capable of outputting the key operation signal under authorization concerning an operation of the electric component upon obtaining the authorization, and preferably cease displaying the operation button in the screen region when the mobile terminal has obtained the authorization and is located outside of the first area.

The mobile terminal may be configured to become capable of outputting the key operation signal under authorization concerning an operation of the electric component upon obtaining the authorization, and in the first area, preferably provide a display that prompts the occupant to obtain the authorization when the mobile terminal has not obtained the authorization while displaying the operation button in the screen region when the mobile terminal has obtained the authorization.

The vehicle may include a receiver that receives the key operation signal and a signal transmitter.

The mobile terminal may be configured to detect a reception intensity of a signal transmitted from the signal transmitter, and preferably determine whether the mobile terminal is located in the first area based on the detected reception intensity.

The mobile terminal may be configured to become capable of outputting the key operation signal under authorization concerning an operation of the electric component upon obtaining the authorization, and preferably provide a display that prompts the occupant to perform an operation of bringing the mobile terminal close to the receiver when the mobile terminal is located outside of the first area after obtaining the authorization.

According to one aspect of the present invention, the display in the screen region varies between when the mobile terminal is located in the first area and when the mobile terminal is located outside of the first area, and when the mobile terminal is located in the first area, the operation button is displayed in the screen region, and output of a signal (key operation signal) corresponding to an operation based on a key permission is permitted. In this way, the occupant can easily recognize whether the electric component can be operated with the mobile terminal, from the display in the screen region including the operation button.

### BRIEF DESCRIPTION OF THE DRAWINGS

Fig. 1 is a schematic diagram showing a general configuration of an electronic key system for a vehicle according to an embodiment of the present invention;
Fig. 2 is a schematic diagram showing an internal configuration of a computing unit of the electronic key system shown in Fig. 1;
Fig. 3 is a flowchart showing details of a screen switching process performed by a mobile terminal in a digital key control;
Fig. 4 is a flowchart showing details of a driver authorization obtainment determination process performed by the mobile terminal in the digital key control;
Fig. 5 is a flowchart showing details of a driver authorization release determination process performed by the mobile terminal in the digital key control;
Fig. 6 is a schematic diagram showing radio wave reception areas (an accessible area A1 and a start area A2) of the mobile terminal;
Fig. 7 is a state transition diagram conceptually showing switching between home screens;
Fig. 8 is a schematic diagram showing an initial screen;
Fig. 9 is a schematic diagram showing home screens 1 and 2;
Fig. 10 is a schematic diagram showing a home screen 3 (before and after start of the vehicle);
Fig. 11 is a schematic diagram showing a power supply alert screen; and
Fig. 12 is a schematic diagram showing a usage confirmation screen.

### DETAILED DESCRIPTION OF THE PREFERRED EMBODIMENT

In the following, an embodiment of the present invention will be described with reference to the drawings.

In the following description, an "occupant" refers to a person who is or will be sitting in a driver's seat (referred to also as a "driver") or a person who is or will be sitting in a seat other than the driver's seat, and the occupant who is or will be sitting in a seat other than the driver's seat is referred also to a "passenger". The seats other than the driver's seat include seats next to and behind the driver's seat, the seat next to the driver's seat may be referred to as a "passenger seat", and a seat behind the driver's seat may be referred to as a "rear seat". That is, a "passenger" may be an occupant who is or will be sitting in the passenger seat or an occupant who is or will be sitting in a rear seat.

### (General Configuration of Electronic Key System)

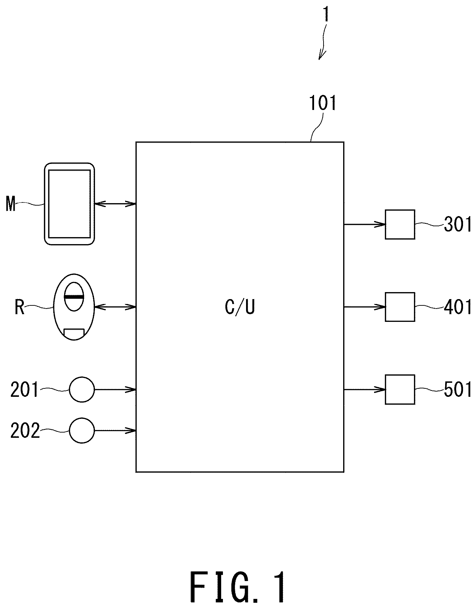

Fig. 1 is a schematic diagram showing a general configuration of an electronic key system 1 for a vehicle (referred to simply as an "electronic key system", hereinafter) according to an embodiment of the present invention. The electronic key system 1 provides a so-called key-less entry system that does not rely on any physical key that is inserted into a keyhole.

The electronic key system 1 includes a mobile terminal M, a vehicle key R, an onboard controller (referred to simply as a "controller", hereinafter) 101 and a power supply switch 201 as main components.

In addition to the components described above, the electronic key system 1 includes a brake switch 202 as an auxiliary component.

The mobile terminal M forms an input unit of the electronic key system 1 along with the vehicle key R and the power supply switch 201. The mobile terminal M can operate as a digital key and outputs a key operation signal corresponding with a key permission of the digital key.

As described in detail later, in this embodiment, the occupant can operate a button displayed on a screen of the mobile terminal M to control locking and unlocking of a door of a vehicle, turning on and off of a power supply, and start and stop of the vehicle. To this end, the mobile terminal M outputs a key operation signal corresponding to a button operation by the occupant to the controller 101.

The mobile terminal M downloads a computer program of an application (referred to as a "digital key application", hereinafter) for setting or assignment of a digital key from a remote server (not shown). The mobile terminal M can operate as the digital key once the digital key application is installed in the mobile terminal M.

Here, the term "digital key" refers to a function assigned to the mobile terminal M. In the following description, however, the mobile terminal M that has the digital key application installed therein and can operate as a digital key may also be referred to as a "digital key", for the sake of convenience.

In this embodiment, a plurality of key permissions of the digital key can be set in the mobile terminal M.

Permissions that are set in the mobile terminal M include a door locking permission concerning locking and unlocking of a door of a vehicle (which may be referred to simply as a "door", hereinafter), a power supply state transition permission concerning start and stop of a power supply unit mounted on a vehicle, that is, concerning turning on and off of a power supply, and a vehicle start permission concerning start and stop of a drive unit involved with production of a driving force for running of the vehicle (referred to simply as a "drive unit", hereinafter).

The door locking permission, the power supply state transition permission and the vehicle start permission may be referred to also as a "first key permission", a "second key permission" and a "third key permission", respectively.

In practice, when there are a plurality of mobile terminals M, different key permissions may be set in different mobile terminals M.

Specifically, the power supply state transition permission and the vehicle start permission may be set in only one or some of the plurality of mobile terminals M, while the door locking permission is set in all the plurality of mobile terminals M.

For example, of a plurality of occupants, the door locking permission is set in the mobile terminals M of the driver and all the passengers, while the power supply state transition permission and the vehicle start permission are set in only the mobile terminal(s) M of the driver or some passengers. In other words, the mobile terminal(s) M of the driver or some passengers serves as a digital key with all key permissions set therein, while the mobile terminals M of the other occupants serve as a digital key with only the door locking permission set therein.

The mobile terminal M has a screen capable of displaying an operation button concerning an operation based on the key permission. The screen of the mobile terminal M is divided into a plurality of regions, and an operation button corresponding with the key permission can be displayed in each of the plurality of regions (each divisional screen will be referred to as a "screen region", hereinafter). The screen of the mobile terminal M is a touch-sensitive screen, for example, and the mobile terminal M outputs a key operation signal in response to the occupant operating (tapping, for example) the operation button displayed in a screen region with the occupant's finger or the like.

The mobile terminal M may be a smartphone.

The vehicle key R is a remote key that is portable by the occupant and is provided with an operation button concerning locking and unlocking of a door. The occupant (such as the driver) with the vehicle key R can lock the door by pushing the door locking button provided on the vehicle key R and can release the lock of the door (that is, unlock the door) by pushing the door unlocking button.

The vehicle key R further has an authentication function concerning the power supply state transition or start of the vehicle.

The vehicle key R may be a smart key or a keyless entry system, rather than the remote key.

In this embodiment, the smart key is an electronic key that has no physical button used to lock and unlock a door and can release the door lock in response to an occupant with the smart key touching the door knob or pulling the knob. The keyless entry system is a system that includes both an operation button for locking and unlocking a door of a vehicle and a physical key that is inserted into a keyhole for power supply state transition or start of the vehicle.

The power supply switch 201 is provided at a position within reach of the driver sitting in the driver's seat, such as a position close to a steering column. The power supply switch 201 includes a button operable by the driver and outputs an on signal to the controller 101 when the button is pushed by the driver. In this embodiment, the power supply switch 201 is a push start button.

The brake switch 202 is provided on a brake pedal or a moving component associated therewith and is normally in the off state. The brake switch 202 is turned on and outputs an on signal to the controller 101 when the brake pedal is pressed by the driver.

The controller 101 forms a computing unit of the electronic key system 1. The controller 101 receives output signals from the mobile terminal M, the vehicle key R, the power supply switch 201 and the brake switch 202, processes the signals according to a previously stored control program, and outputs instruction signals, which are results of processing, to a power supply unit 301, a drive unit 401 and a door lock unit 501. An internal configuration of the controller 101 will be described in detail later.

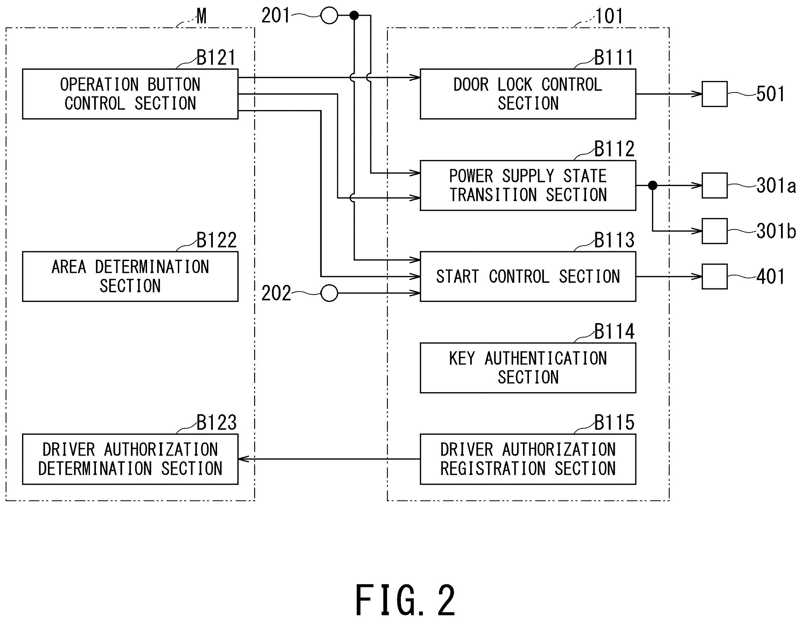

In this embodiment, as power supply units 301 of the vehicle, an accessory power supply unit 301a and a system power supply unit 301b are provided (Fig. 2). The accessory power supply unit 301a provides a power supply for car audio equipment such as a radio, a navigation system or an instrument on an instrument panel. The system power supply unit 301b is referred to also as a power-on power supply unit and provides a power supply for the drive unit 401.

The driver with the digital key (mobile terminal M) or vehicle key R can turn on the accessory power supply unit 301a by pushing the power supply switch 201 without pressing the brake pedal. In this case, the controller 101 outputs an on signal as an instruction signal to the accessory power supply unit 301a.

On the other hand, the driver with the digital key or vehicle key R can turn on both the accessory power supply unit 301a and the system power supply unit 301b and activate the drive unit 401 by pushing the power supply switch 201 while pressing the brake pedal. In this case, the controller 101 outputs an on signal as an instruction signal to each of the accessory power supply unit 301a and the system power supply unit 301b and outputs an activation signal to the drive unit 401. By turning on the system power supply unit 301b, the drive unit 401 can be activated to start the vehicle.

When the controller 101 receives an output signal that indicates to lock the door from the mobile terminal M or vehicle key R, the controller 101 further outputs a door locking signal as an instruction signal to the door lock unit 501. On the other hand, when the controller 101 receives an output signal that indicates to unlock the door, the controller 101 outputs a door lock releasing signal as an instruction signal to the door lock unit 501.

The door lock unit 501 includes a door lock actuator. The door lock unit 501 makes the door lock actuator operate in a door locking direction to lock the door when the door lock unit 501 receives the door locking signal, and makes the door lock actuator in a door unlocking direction to unlock the door when the door lock unit 501 receives the door unlocking signal.

Here, the power supply unit 301, the drive unit 401 and the door lock unit 501 form an "electrical component" in this embodiment.

### (Internal Configuration of Computing Unit)

In this embodiment, the computing unit of the electronic key system 1 is formed by the mobile terminal M and the controller 101.

The controller 101 is formed by a microcomputer including a central processing unit (CPU), an input/output interface and various storage devices, such as a ROM and a RAM, and is mounted on a vehicle as an electronic control unit.

The electronic key system 1 includes a door lock control section B111, a power supply state transition section B112, a start control section B113, a key authentication section B114, a driver authorization registration section B115, an operation button control section B121, an area determination section B122 and a driver authorization determination section B123, as components forming the computing unit. Functions of these components are implemented on a software basis by the mobile terminal M or controller 101 reading a previously stored control program and operating according to an instruction indicated by the control program.

In this embodiment, the door lock control section B111, the power supply state transition section B112, the start control section B113, the key authentication section B114 and the driver authorization registration section B115 are provided in the controller 101, and the operation button control section B121, the area determination section B122 and the driver authorization determination section B123 are provided in the mobile terminal M.

When the door lock control section B111 receives a key operation signal based on a door locking permission, specifically, a key operation signal that indicates to lock or unlock the door, from the mobile terminal M, the door lock control section B111 outputs a door locking signal or a door unlocking signal to the door lock unit 501.

When the door lock control section B111 receives an output signal that indicates to lock or unlock the door from the vehicle key R, the door lock control section B111 further outputs a door locking signal or a door unlocking signal as an instruction signal to the door lock unit 501.

When the power supply state transition section B112 receives a key operation signal from the mobile terminal M or an output signal from the power supply switch 201 and receives a key operation signal or output signal that indicates to turn on the power supply, the power supply state transition section B112 outputs an on signal to both, or only the accessory power supply unit 301a, of the accessory power supply unit 301a and the system power supply unit 301b.

The output of the on signal from the power supply state transition section B112 can be implemented by operating the power supply switch 201 after the digital key (mobile terminal M) is authenticated. That is, the output of the on signal from the power supply state transition section B112 can be implemented by the driver pushing the power supply switch 201 in a state where the mobile terminal M is placed on a tray (smartphone tray).

Furthermore, the power supply state transition section B112 can output the on signal in response to the power supply switch 201 being operated after the vehicle key R is authenticated, and outputs the on signal in response to the driver with the vehicle key R pressing the power supply switch 201.

The authentication of the vehicle key R or the digital key is implemented by the key authentication section B114 described later.

When the start control section B113 receives a key operation signal from the mobile terminal M or an output signal from the power supply switch 201 and receives a key operation signal or output signal that indicates to activate the drive unit 401, the start control section B113 outputs an on signal to the drive unit 401. The start control section B113 outputs the on signal when the driver operates the mobile terminal M or presses the power supply switch 201 while pressing the brake pedal.

When the key authentication section B114 receives a key operation signal or output signal that indicates to turn on the power supply from the mobile terminal M or the power supply switch 201, the key authentication section B114 grants authentication to the vehicle key R or the digital key in the procedure described below.

For example, the vehicle key R is provided with a receiver and a transmitter, and when the receiver detects a weak radio wave transmitted from the controller 101, the transmitter transmits a response radio wave back to the controller 101. The controller 101 receives the response radio wave and determines whether registration of the vehicle key R is completed. The controller 101 grants authentication of the vehicle key R on the condition that the registration is completed. Authentication of the digital key can be granted in the same procedure.

The driver authorization registration section B115 stores a setting status of driver authorization for the digital key (mobile terminal M) and provides a notification of a current setting status in response to a query about driver authorization from the mobile terminal M. The setting status of driver authorization includes the presence or absence of a digital key (mobile terminal M) that has obtained driver authorization and an identifier of the mobile terminal M, for example.

The operation button control section B121 controls the screen of the mobile terminal M assigned with a digital key and displays an operation button corresponding with the key permission in each screen region.

The operation button control section B121 changes the screen of the mobile terminal M according to the distance of the mobile terminal M from the vehicle or, in other words, the relative position of the mobile terminal M with respect to the vehicle. In this embodiment, a plurality of areas (an accessible area A1 and a start area A2) are set with respect to the vehicle, and the area in which the mobile terminal M is located is determined. The screen region displayed is changed according to the determined area.

The operation button control section B121 further generates various key operation signals corresponding with the key permission in response to an operation of the operation button by an occupant and outputs the key operation signals.

The key operation signals output by the operation button control section B121 include a first key operation signal that indicates to lock or unlock the door, a second key operation signal that indicates to turn on or off the power supply, and a third key operation signal that indicates to activate or deactivate the drive unit 401. The first key operation signal is output to the door lock control section B111, the second key operation signal is output to the power supply state transition section B112, and the third key operation signal is output to the start control section B113.

The area determination section B122 determines the area in which the mobile terminal M is located. In this embodiment, an accessible area A1 and a start area A2, which is narrower than the accessible area A1, are set with respect to the vehicle. The area determination section B122 determines in which range the mobile terminal M is located of the range outside of the accessible area A1, the range inside of the accessible area A1 (excluding the start area A2) and the range inside of the start area A2.

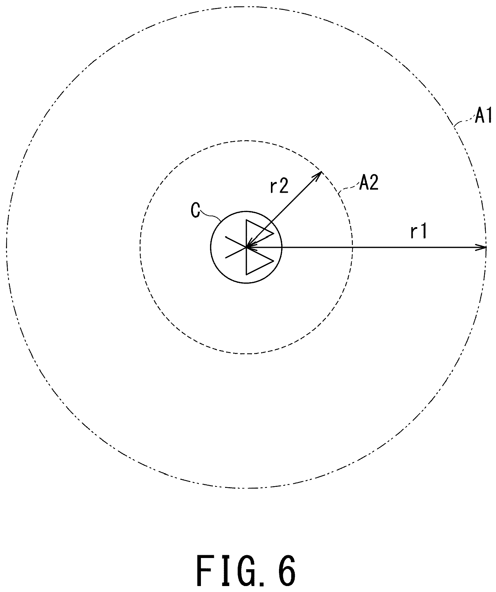

In this embodiment, the area in which the mobile terminal M is located is determined based on a reception intensity Sr of a radio wave emitted from the vehicle (referred to as a "radio wave intensity", hereinafter). The vehicle is provided with a radio communication device C (Fig. 6), and the mobile terminal M receives a radio wave emitted from the radio communication device C. The area determination section B122 detects the signal intensity of the received radio wave (that is, the radio wave intensity Sr), and determines the area in which the mobile terminal M is located based on the detected radio wave intensity Sr.

Specifically, different threshold intensity values (a first threshold intensity Sr1 and a second threshold intensity Sr2) are set for the radio wave intensity Sr.

When the radio wave intensity Sr received by the mobile terminal M is lower than the first threshold intensity Sr1, which is relatively low (Sr < Sr1), the area determination section B122 determines that the mobile terminal M is located outside of the accessible area A1. When the radio wave intensity Sr is equal to or higher than the first threshold intensity Sr1 and is lower than the second threshold intensity Sr2, which is higher than the first threshold intensity Sr1 (Sr1 ≤ Sr < Sr2), the area determination section B122 determines that the mobile terminal M is located in the accessible area A1 (excluding the start area A2). When the radio wave intensity Sr is equal to or higher than the second threshold intensity Sr2 (Sr2 ≤ Sr), the area determination section B122 determines that the mobile terminal M is located in the start area A2.

In this embodiment, the start area A2 corresponds to a "first area", and the accessible area A1 corresponds to a "second area".

Furthermore, the radio communication device C forms a "signal transmitter" according to this embodiment and serves also as a "receiver" that receives a key operation signal.

The driver authorization determination section B123 determines whether a condition previously set concerning obtaining of driver authorization (referred to as a "driver authorization obtainment condition", hereinafter) is satisfied, and driver authorization is obtained when this condition is satisfied.

The driver authorization determination section B123 further determines whether a condition previously set concerning releasing of driver authorization (referred to as a "driver authorization releasing condition", hereinafter) is satisfied after driver authorization is obtained, and the obtained driver authorization is released when this condition is satisfied.

In addition, when a digital key (mobile terminal M) has obtained driver authorization, the driver authorization determination section B123 transmits, to the driver authorization registration section B115, information indicating that driver authorization has been obtained (referred to as "driver authorization obtainment information", hereinafter) associated with the identifier of the mobile terminal M. When the obtained driver authorization is released, the driver authorization determination section B123 transmits information indicating the releasing of driver authorization (referred to as "driver authorization release information", hereinafter) associated with the identifier of the mobile terminal M to the driver authorization registration section B115.

Here, the driver authorization obtainment condition and the driver authorization releasing condition will be described.

In this embodiment, the driver authorization obtainment condition is satisfied when all the following detailed conditions a1 to a4 are satisfied on the premise that any digital key (mobile terminal M) has not obtained driver authorization:
a1) the power supply is in the off state;
a2) the door lock is released by an operation of the digital key;
a3) there is no digital key having obtained driver authorization or any digital key having obtained driver authorization is located outside of the communication range of the controller 101; and
a4) the power supply state transition permission is set in the digital key.

On the other hand, the driver authorization releasing condition is satisfied when both the following detailed conditions b1 and b2 are satisfied:
b1) the power supply is in the off state; and
b2) door locking has been implemented by the digital key or vehicle key R.

In this embodiment, as described above, driver authorization is granted to a digital key (mobile terminal M) in which the power supply state transition permission is set among the plurality of key permissions on the condition that the digital key has output a key operation signal that indicates to release the door lock. Once driver authorization is granted to the digital key, the digital key can exercise the power supply state transition permission and the vehicle start permission and can perform operations corresponding with these permissions. In this way, according to this embodiment, only one of the plurality of mobile terminals M can obtain driver authorization and can be operated as a digital key to turn on the power supply and start the vehicle.

### (Screens of Mobile Terminal and Switching between Screens)

A home screen displayed on the mobile terminal M when the digital key application is activated and switching between home screens will be described with reference to Figs. 6 to 12.

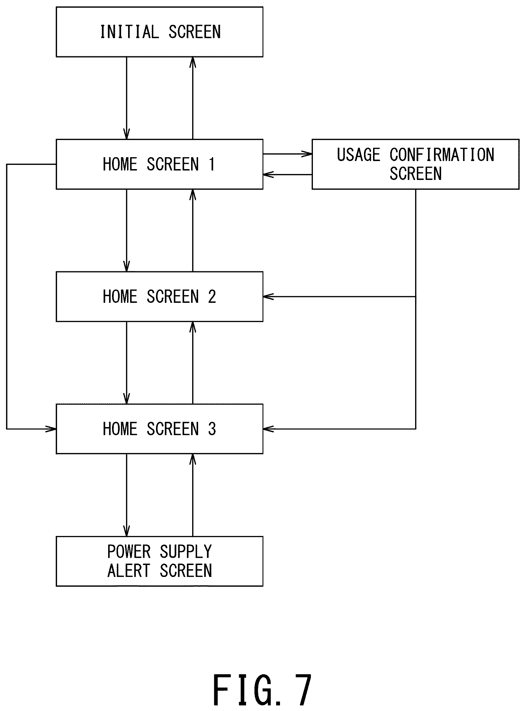

Fig. 6 is a schematic diagram showing a radio wave reception area of the mobile terminal M, and Fig. 7 is a state transition diagram conceptually showing switching between home screens.

In this embodiment, the radio wave reception area of the mobile terminal M is set with respect to the radio communication device C installed in the vehicle and includes the accessible area A1, which is set in a circular range having a relatively large radius r1 from the radio communication device C, and the start area A2, which is set in a circular range having a radius r2 smaller than the radius r1 from the radio communication device C.

The radio communication device C is disposed in the vehicle, for example, close to a wireless charger (not shown) installed beside the driver's seat. The radio communication device C and the wireless charger can be disposed close to each other in a smartphone tray provided on a console box in the vehicle.

The radio communication device C can communicate by radio with the mobile terminal M via Bluetooth Low Energy (BLE) connection, for example.

In this embodiment, the accessible area A1 is set in a range of a radius r1 of the order of 6 m from the radio communication device C, and the start area A2 is set in a range of a radius r2 of the order of 2 m from the radio communication device C.

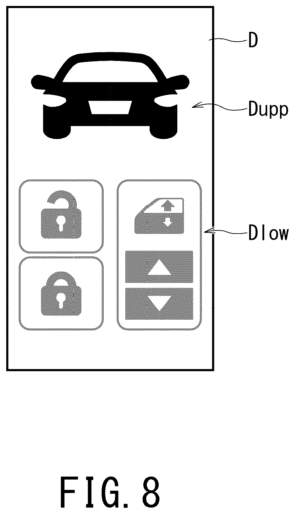

When the driver with the mobile terminal M who is getting in the vehicle activates the digital key application in an area outside of the accessible area A1 (referred to as an "inaccessible area", hereinafter), an initial screen is displayed on the mobile terminal M. Fig. 8 illustrates the initial screen.

In the initial screen, no operation button concerning an operation based on a key permission is displayed. In other words, in the inaccessible area, the mobile terminal M is prohibited from outputting any key operation signal, and the driver cannot perform any operation based on a key permission. In this embodiment, in a region Dupp set in the upper half of the initial screen viewed from the front of a display D, the appearance or model of the vehicle that uses the digital key (mobile terminal M) is displayed.

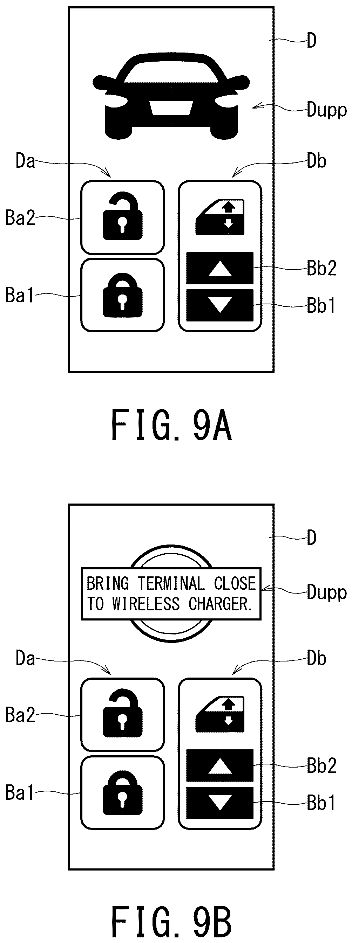

After the digital key application is activated, when the driver comes close to the vehicle and the mobile terminal M enters the accessible area A1, a home screen 1 is displayed on the mobile terminal M. Fig. 9(a) illustrates the home screen 1.

On the home screen 1, in a region Da set in a left part of a region Dlow in the lower half of the screen viewed from the front of the display D, operation buttons concerning an operation based on the door locking permission, specifically, operation buttons Ba1 and Ba2 concerning locking and unlocking of the door are displayed. In a region Db set in a right part of the region Dlow, operation buttons Bb1 and Bb2 concerning opening and closing of the window are displayed.

The driver can lock the door by operating a door locking button Ba1 displayed in a lower part of the region Da, and can release the door lock by operating a door unlocking button Ba2 displayed in an upper part of the region Da.

The driver further can open the window beside the seat in which the driver is sitting, that is, the window beside the driver's seat by operating a window opening button Bb1 displayed as a down arrow in the region Db, and can close the window beside the driver's seat by operating a window closing button Bb2 displayed as an up arrow in the region Db.

The driver performs operations of the various buttons Ba1, Ba2, Bb1 and Bb2 by tapping on the screen, for example.

When the driver operates the door unlocking button Ba2 to release the door lock, the screen displayed on the mobile terminal M changes from the home screen 1 to a home screen 2. Fig. 9(b) illustrates the home screen 2.

Here, once the door lock is released, the mobile terminal M obtains driver authorization and can exercise the power supply state transition permission and the vehicle start permission.

On the home screen 2, in the region Dlow in the lower half of the screen viewed from the front of the display D, that is, in the regions Da and Db, the same operation buttons Ba1, Ba2, Bb1 and Bb2 as those on the home screen 1 are displayed. In addition, on the home screen 2, in the region Dupp in the upper half of the screen, a message to request that the mobile terminal M should be brought close to the radio communication device C is displayed instead of the appearance or model of the vehicle. For example, the message is as follows:
"BRING TERMINAL CLOSE TO WIRELESS CHARGER."

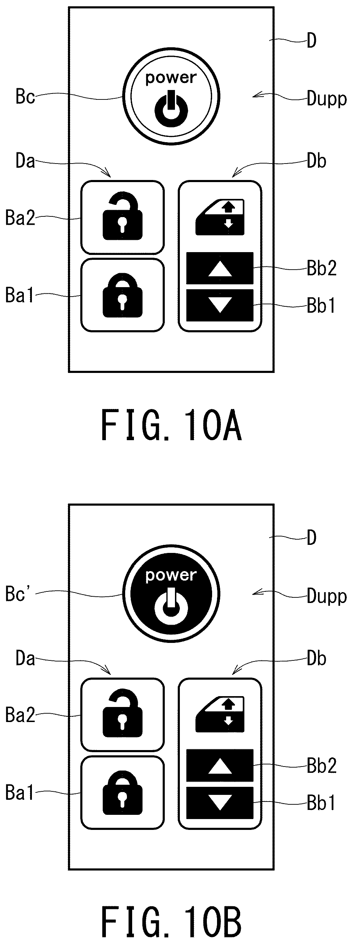

When the driver opens the door and gets in the vehicle, the mobile terminal M enters the start area A2, and the screen displayed on the mobile terminal M changes from the home screen 2 to a home screen 3. Fig. 10(a) illustrates the home screen 3.

On the home screen 3, in addition to the various operation buttons Ba1, Ba2, Bb1 and Bb2, an operation button concerning an operation based on the power supply state transition permission and the vehicle start permission, that is, an operation button Bc concerning turning on and off of the power supply and starting of the vehicle (referred to as a "power button", hereinafter) is displayed in the region Dupp in the upper half of the screen viewed from the front of the display D.

As described above, the driver can activate the accessory power supply unit 301a by operating (tapping, for example) the power button Bc without pressing the brake pedal, and can activate both the accessory power supply unit 301a and the system power supply unit 301b and activate the drive unit 401 to start the vehicle by operating the power button Bc while pressing the brake pedal.

When the driver operates the power button Bc to turn on the power supply, the home screen 3 displayed on the mobile terminal M changes from a state before power-on, which is shown in Fig. 10(a), to a state after power-on, which is shown in Fig. 10(b).

In the state after power-on, the power button Bc is more visually markedly displayed than in the state before power-on (the power button in this state is denoted as a power button Bc'). For example, the power button Bc' is displayed in a different color or emits light of a different color than the power button Bc in the state before power-on.

After that, the driver can turn off the power supply and stop the vehicle by operating the power button Bc' on the home screen 3 shown in Fig. 10(b) again. When the power supply is turned off, the screen of the display D changes to the home screen 3 shown in Fig. 10(a).

After the power supply is turned off, when the driver gets out of the vehicle and operates the door locking button Ba1, the driver authorization is released, and the screen on the display D changes to the home screen 1 shown in Fig. 9(a).

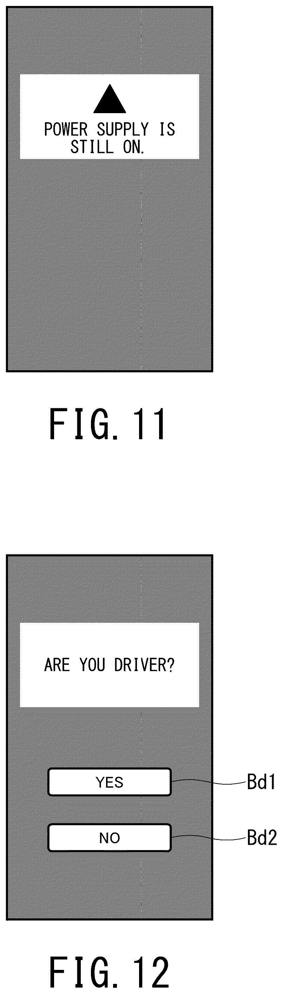

If the driver gets out of the vehicle without turning off the power supply, that is, while the power supply is in the on state, and operates the door locking button Ba1 or goes out of the start area A2, the screen displayed on the mobile terminal M changes from the home screen 3 to a power supply alert screen. Fig. 11 illustrates the power supply alert screen.

On the power supply alert screen, any operation button including the door locking button Ba1 is not displayed, and a message is displayed to alert the driver or other occupant with the mobile terminal M to the fact that the power supply is still in the on state. For example, the message is as follows:
"POWER SUPPLY IS STILL ON."

In this embodiment, furthermore, when the driver who is getting in the vehicle activates the digital key application and releases the door lock by button operation on the vehicle key R, a usage confirmation screen is displayed on the mobile terminal M. Fig. 12 illustrates the usage confirmation screen.

On the usage confirmation screen, any operation button including the door locking button Ba1 is not displayed, and a message is displayed to prompt the driver to obtain driver authorization. For example, the message is as follows:
"ARE YOU DRIVER?"

On the usage confirmation screen, a pair of buttons Bd1 and Bd2 for the driver to input the answer to the message are also displayed. When the driver operates a first button Bd1, which indicates the intention to obtain driver authorization, the digital key (mobile terminal M) obtains driver authorization. When the driver operates the other button, specifically, a second button Bd2, the digital key defers obtaining driver authorization.

When the digital key has obtained driver authorization, the screen on the display D changes to the home screen 2 shown in Fig. 9(b) or the home screen 3 shown in Fig. 10(a). When the digital key has deferred obtaining driver authorization, the screen on the display D changes to the home screen 1 shown in Fig. 9(a).

In this embodiment, in the display D, the region Da in which the door locking button Ba1 and the door unlocking button Ba2 are displayed, the region Db in which the window opening button Bb1 and the window closing button Bb2 are displayed, and the region Dupp in which the power button Bc is displayed each correspond to the "screen region". The power button Bc corresponds to a "first operation button", and the door locking button Ba1 and the door unlocking button Ba2 correspond to a "second operation button".

### (Digital Key Control)

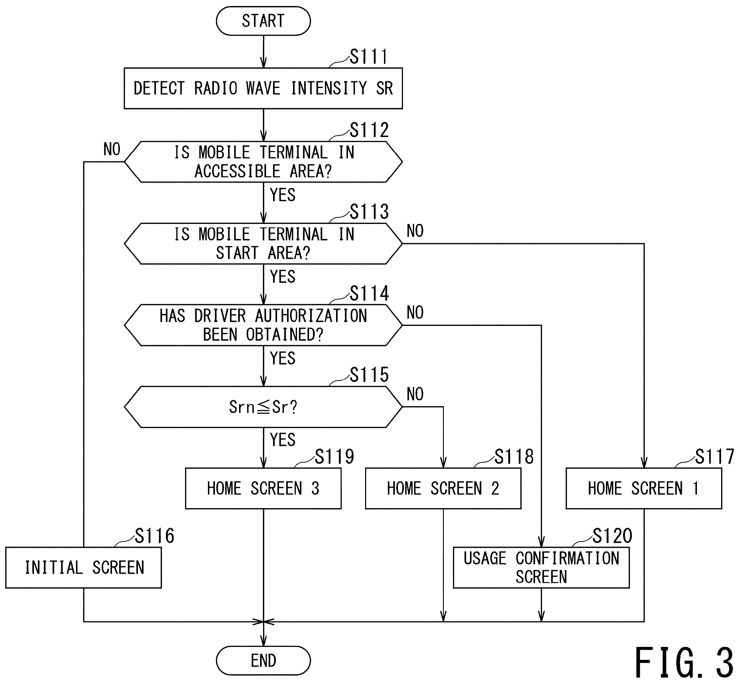

With reference to the flowcharts of Figs. 3 to 5, a digital key control will be described below. In this embodiment, the digital key control is implemented by the mobile terminal M and the controller 101. Figs. 3 to 5 show details of processes performed by the mobile terminal M.

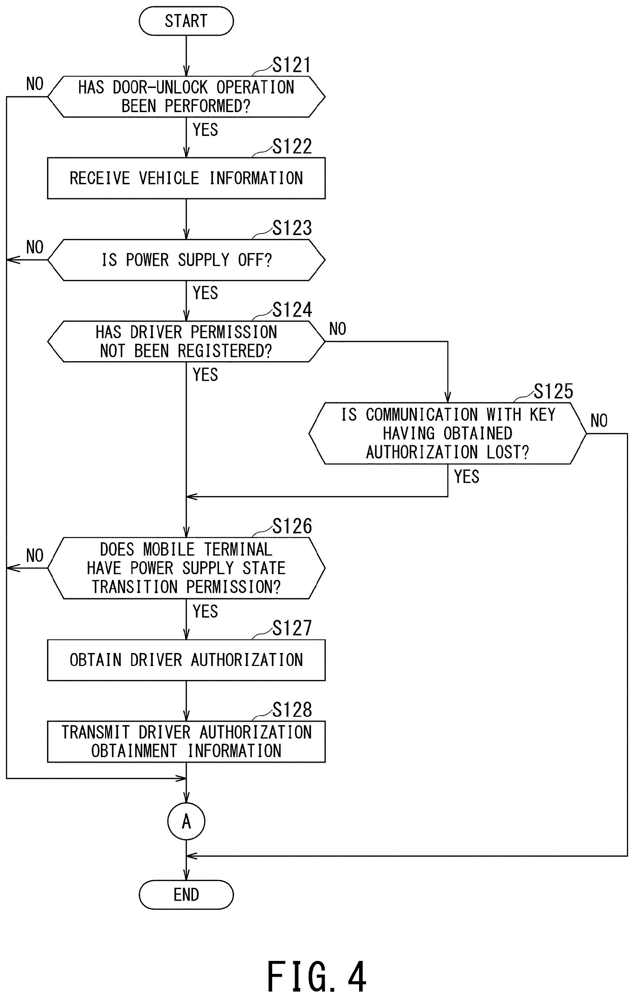

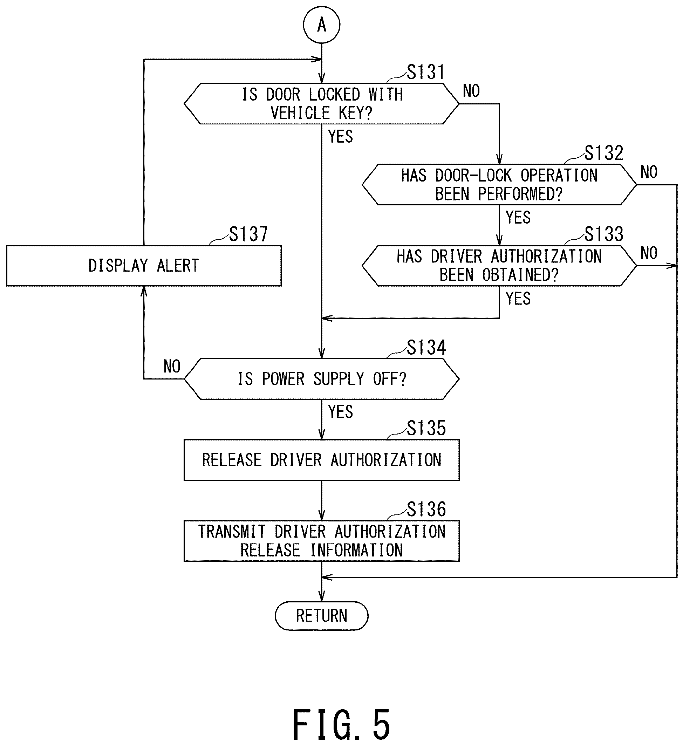

In the flowchart of Fig. 3, switching between screens displayed on the mobile terminal M is controlled (a screen switching process). In the flowchart of Fig. 4, whether a driver authorization obtainment condition is satisfied is determined (a driver authorization obtainment determination process). In the flowchart of Fig. 5, whether a driver authorization releasing condition is satisfied is determined (a driver authorization release determination process).

In this embodiment, the screen switching process is performed at predetermined time intervals as a background process for the driver authorization obtainment determination process and the driver authorization release determination process.

In this embodiment, furthermore, the driver authorization obtainment condition is satisfied when all the detailed conditions a1 to a4 described above are satisfied, and the driver authorization releasing condition is satisfied when both the detailed conditions b1 and b2 described above are satisfied.

In the screen switching process (Fig. 3), in S111, the signal intensity of the radio wave transmitted from the radio communication device C, that is, the radio wave intensity Sr is detected.

In S112, whether the mobile terminal M is located in the accessible area A1 is determined based on the detected radio wave intensity Sr. When the radio wave intensity Sr is equal to or higher than the first threshold intensity Sr1 (Sr1 ≤ Sr), it is determined that the mobile terminal M is located in the accessible area A1. When the mobile terminal M is located in the accessible area A1, the process proceeds to S113. When the mobile terminal M is located outside of the accessible area A1, the process proceeds to S116.

In S113, whether the mobile terminal M is located in the start area A2 is determined based on the detected radio wave intensity Sr. When the radio wave intensity Sr is equal to or higher than the second threshold intensity Sr2 (Sr2 ≤ Sr), it is determined that the mobile terminal M is located in the start area A2. When the mobile terminal M is located in the start area A2, the process proceeds to S114. When the mobile terminal M is located outside of the start area A2, the process proceeds to S117.

In S114, whether driver authorization is obtained is determined. Driver authorization is obtained in the driver authorization obtainment determination process described later. When driver authorization is obtained, the process proceeds to S115. When driver authorization is not obtained, the process proceeds to S120.

In S115, whether the detected radio wave intensity Sr is equal to or higher than a proximity determination intensity Srn, which is higher than the second threshold intensity Sr2, is determined. When the radio wave intensity Sr is equal to or higher than the proximity determination intensity Srn, the process proceeds to S119. When the radio wave intensity Sr is lower than the proximity determination intensity, the process proceeds to S118.

In S116, the initial screen (Fig. 8) is displayed on the mobile terminal M.

In S117, the home screen 1 (Fig. 9(a)) is displayed on the mobile terminal M.

In S118, the home screen 2 (Fig. 9(b)) is displayed on the mobile terminal M.

In S119, the home screen 3 (Fig. 10(a)) is displayed on the mobile terminal M.

In S120, the usage confirmation screen (Fig. 12) is displayed on the mobile terminal M.

In the driver authorization obtainment determination process (Fig. 4), in S121, whether a key operation signal that indicates to release the door lock or, in other words, whether the door lock is released by the digital key (mobile terminal M) is determined. When a key operation signal that indicates to release the door lock is output, the process proceeds to S122. Otherwise, specifically, when the door lock is released not by the digital key but by the vehicle key R, the process proceeds to S131 in the flowchart of Fig. 5.

In S122, vehicle information is obtained from the controller 101. The vehicle information includes information about the on/off state of the power supply, information about the state of obtaining of driver authorization, and information about the communication condition of the mobile terminal M assigned with the digital key with the controller 101.

In S123, whether the power supply of the vehicle is in the off state is determined. When the power supply is in the off state, the process proceeds to S124. When the power supply is in the on state, the process proceeds to S131 in the flowchart of Fig. 5.

In S124, whether any mobile terminal M assigned with a digital key has not obtained driver authorization is determined. The presence or absence of a mobile terminal M having obtained driver authorization can be determined based on the vehicle information obtained from the controller 101, specifically, the information about the state of obtaining of driver authorization. When any mobile terminal M has not obtained driver authorization or, in other words, when there is no mobile terminal M having obtained driver authorization, the process proceeds to S126. Otherwise, that is, when there is a mobile terminal M having obtained driver authorization, the process proceeds to S125.

In S125, whether the mobile terminal M having obtained driver authorization (which may be referred to as an "authorized terminal", hereinafter) is located outside of the communication range with the controller 101 or, in other words, whether the communication between the authorized terminal M and the controller 101 is in a lost state is determined. When the authorized terminal M is located outside of the communication range with the controller 101, the process proceeds to S126. When the authorized terminal M is located in the communication range, it is determined that there is already a mobile terminal M having obtained driver authorization, and the current control ends.

In S126, whether the mobile terminal M has the power supply state transition permission is determined. When the mobile terminal M has the power supply state transition permission, the process proceeds to S127. When the mobile terminal M does not have the power supply state transition permission, the process proceeds to S131 in the flowchart of Fig. 5.

Here, the reason why only the presence or absence of the power supply state transition permission is determined is because the power supply needs to be turned on in order to start the vehicle. Therefore, in this embodiment, the power supply state transition permission is a permission for activating at least the system power supply unit 301b of the accessory power supply unit 301a and the system power supply unit 301b.

In S126, as an alternative to the determination of only the presence or absence of the power supply state transition permission, the condition for proceeding to S127 may be that the mobile terminal M has both the power supply state transition permission and the vehicle start permission. Alternatively, the presence or absence of the vehicle start permission may be determined instead of the presence or absence of the power supply state transition permission, and the process may proceed to S127 when the mobile terminal M has the vehicle start permission. In that case, for example, when the driver operates the power button Bc without pressing the brake pedal, that is, when the driver only activates the accessory power supply unit 301a, the mobile terminal M can defer obtaining driver authorization and leave an opportunity for the mobile terminal M of a passenger to obtain driver authorization.

In S127, the mobile terminal M having output the key operation signal that indicates to release the door lock obtains driver authorization.

In this embodiment, as can be seen from the above description, the mobile terminal M that obtains driver authorization is the mobile terminal M that outputs the key operation signal that indicates to release the door lock, and driver authorization is obtained only when the condition that the power supply is in the off state (S123), the condition that there is no mobile terminal M having obtained driver authorization (S124) or there is already an authorized terminal M but the terminal M is located outside of the communication range with the controller 101 (S125), and the condition that the mobile terminal M has the power supply state transition permission (S126) are all satisfied.

In S218, the mobile terminal M transmits information indicating that the mobile terminal M has obtained driver authorization (driver authorization obtainment information) to the controller 101.

In the driver authorization release determination process (Fig. 5), in S131, whether the door is locked by the vehicle key R is determined. When the door is locked by the vehicle key R, the process proceeds to S134. Otherwise, specifically, when the door is not locked or when the door is not locked by the vehicle key R but by the digital key, the process proceeds to S132.

In S132, whether a key operation signal that indicates to lock the door or, in other words, whether the door is locked by the digital key (mobile terminal M) is determined. When the key operation signal that indicates to lock the door is output, the process proceeds to S133. Otherwise, specifically, when the door is not locked and is in the unlocked state, the process returns to the flowchart of Fig. 4, and the current control ends.

In S133, whether driver authorization is obtained is determined. When driver authorization is obtained, the process proceeds to S134. When driver authorization is not obtained, the process returns to the flowchart of Fig. 4, and the current control ends.

In S134, whether the power supply is in the off state is determined. Whether the power supply is in the off state can be determined based on the vehicle information obtained from the controller 101, specifically, the information about the on/off state of the power supply. When the power supply is in the off state, the process proceeds to S135. When the power supply is in the on state, the process proceeds to S137.

In S135, the obtained driver authorization is released. This results in a state where no mobile terminal M has driver authorization again.

In S136, the mobile terminal M transmits information indicating that the mobile terminal M has released the obtained driver authorization (driver authorization release information) to the controller 101.

In S137, a display that alerts the occupant to the fact that the power supply is still in the on state is provided. For example, when the driver gets out of the vehicle without turning off the power supply and locks the door with the digital key (mobile terminal M) or the vehicle key R, the power supply alert screen (Fig. 11) is displayed on the mobile terminal M to prompt the driver to turn off the power supply.

On the other hand, the controller 101 registers the obtaining status of driver authorization and provides a notification of the current obtaining status of driver authorization in response to a query about the obtaining status from the mobile terminal M.

In this embodiment, the controller 101 has a storage device in which a storage area for driver authorization registration is set, and the obtaining status of driver authorization is recorded in the storage area.

When the controller 101 receives driver authorization obtainment information from the mobile terminal M, the controller 101 performs driver authorization obtainment registration. When the controller 101 receives driver authorization release information, the controller 101 performs driver authorization release registration.

The driver authorization obtainment registration is registration of the mobile terminal M having obtained driver authorization, and the controller 101 changes the obtaining status of driver authorization to "mobile terminal M is registered".

The driver authorization release registration is registration of the driver authorization obtained by the mobile terminal M being released, and the controller 101 changes the obtaining status of driver authorization to "no registration".

### (Description of Operations and Effects)

The electronic key system 1 according to this embodiment has the configuration described above. In the following, effects achieved by this embodiment will be described.

First, a screen area for displaying a button (such as a power button Bc) for a key operation based on a key permission is set in a mobile terminal M assigned with a digital key. The display in the screen region varies between when the mobile terminal M is located in the start area A2 within a distance (the second distance r2) from the vehicle, and when the mobile terminal M is located outside of the start area A2, and output of a key operation signal based on the operation of the power button Bc is permitted when the mobile terminal is located in the start area A2.

Therefore, from the display in the screen region including the operation button, the occupant can easily recognize whether the mobile terminal M is located in the start area A2 and the electric component can be operated with the mobile terminal M.

Second, the operation button (the power button Bc) is displayed in the screen region when the mobile terminal M is located in the start area A2, and is not displayed in the screen region when the mobile terminal M is located outside of the start area A2.

Therefore, the occupant can easily determine whether the mobile terminal M is located in the start area A2 and can reliably prevent any key operation signal from being output when the mobile terminal M is located outside of the start area A2.

Third, the display in the screen region varies between when the mobile terminal M is located in the start area A2 within the distance r2 from the vehicle and when the mobile terminal M is located in the accessible area A1 (excluding the start area A2) within the distance r1 (> r2) from the vehicle. In addition, of operation buttons (the door locking button Ba1 and the door unlocking button Ba2) concerning locking and unlocking of a door and the operation button (power button Bc) concerning turning on and off of the power supply, only the operation button concerning locking and unlocking of a door is displayed when the mobile terminal M is located in the accessible area A1, and both the operation buttons are displayed when the mobile terminal M is located in the start area A2.

Therefore, from the change of the display in the screen region, the occupant can easily recognize that the mobile terminal M has traversed the boundary between the accessible area A1 and the start area A2, for example, that the mobile terminal M has moved from the accessible area A1 into the start area A2.

Furthermore, the operation of the mobile terminal M permitted based on the key permission can be easily and clearly changed based on whether the mobile terminal M is located in the start area A2 or in the accessible area A1.

Here, when the mobile terminal M moves from outside of the accessible area A1 into the accessible area A1, the screen displayed is changed from the initial screen shown in Fig. 8 to the home screen 1 shown in Fig. 9(a), or more specifically, the display of the home screen 1 is switched from the background to the foreground. In this way, the occupant can clearly recognize that the occupant is located in the accessible area A1 and can release the door lock.

Fourth, the mobile terminal M is configured so that the key operation signal corresponding to the power supply state transition permission can be output based on the driver authorization concerning turning on and off of the power supply, and when the mobile terminal M is located outside of the start area A2 after driver authorization is obtained, the operation button (that is, the power button Bc) in the screen region ceases being displayed.

Therefore, based on whether the operation button is displayed or not, the occupant can easily recognize whether the mobile terminal M of the occupant has obtained driver authorization and can be operated based on the power supply state transition permission.

Furthermore, a situation can be avoided in which the operation button unnecessarily ceased being displayed on a mobile terminal M that has not obtained driver authorization, and the efficiency of the control of ceasing displaying the operation button can be improved.

Fifth, a display that prompts the occupant to obtain driver authorization (the usage confirmation screen) is provided when the mobile terminal M is located in the start area A2 but has not obtained driver authorization, and the operation button is displayed in the screen region when the mobile terminal M has obtained driver authorization.

Therefore, the occupant can be alerted to the fact that the mobile terminal M of the occupant can obtain driver authorization, and once the mobile terminal M has obtained driver authorization, the operation button is displayed to alert the occupant to the fact that the mobile terminal M has obtained driver authorization and is located in the start area A2.

Sixth, a signal transmitter (the radio communication device C in this embodiment) is mounted in the vehicle, and whether the mobile terminal M is located in the start area A2 is determined based on the reception intensity Sr of the signal emitted from the signal transmitter.

Therefore, whether the mobile terminal M is located in the start area A2 can be properly and easily determined.

Furthermore, when the signal reception intensity Sr varies, the occupant can be prevented from being affected in determining whether the occupant can operate the electric component with the mobile terminal M.

For example, when whether the mobile terminal M is located in the start area A2 is determined by comparison between the reception intensity Sr and the threshold intensity Sr2, the steering wheel or other parts may interfere with the signal reception to decrease the reception intensity Sr, and as a result, the boundary between inside and outside of the start area A2, that is, the outer periphery of the start area A2 may be determined to be at a closer position to the vehicle than the assumed position. Even in such a case, the occupant can easily determine whether the electric component can be satisfactorily operated with the mobile terminal M, based on the display in the screen region.

Seventh, when the mobile terminal M is located outside of the start area A2 after driver authorization is obtained, a display (the home screen 2) that prompts the occupant to bring the mobile terminal M close to the radio communication device C is provided.

Therefore, the key operation signal can be prevented from being output from the mobile terminal M in a situation where the signal reception intensity Sr varies or the radio wave is weak and the reception intensity Sr is low, and the electric component can be made to properly and reliably operate according to the key operation signal.

Whether the mobile terminal M is located in the area A1 or A2 can be determined not only based on the reception intensity Sr of the radio wave but also based on a detected time of flight (TOF) or channel sounding (CS) of the radio wave.

In the above description, the mobile terminal M assigned with a digital key receives vehicle information from the controller 101 to grasp the obtaining status of driver authorization and then obtains driver authorization. The obtaining of driver authorization is not limited to this, and the controller 101 may grant driver authorization to the mobile terminal M.

For example, in a situation where there is no mobile terminal M to which driver authorization has been granted, and all doors are locked, the controller 101 transmits a signal for granting driver authorization to the first mobile terminal M to output a key operation signal that indicates to release the door lock.

The controller 101 may determine whether a mobile terminal M has obtained driver authorization when the mobile terminal M releases the door lock. The controller 101 is an onboard ECU, for example. Examples of the onboard ECU that can be used as the controller 101 include a body control module (BCM).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

- 1: electronic key system
- 101: onboard controller (controller)
- M: smartphone (mobile terminal)
- R: remote key (vehicle key)
- 201: power supply switch
- 202: brake switch
- 301: power supply unit
- 301a: accessory power supply unit
- 301b: system power supply unit
- 401: drive unit
- 501: door lock unit

## Claims

1. An electronic key system (1) for a vehicle, comprising:
a mobile terminal (M) that outputs a key operation signal corresponding with a key permission of a digital key; and
a controller (101) that controls an operation of an electric component (301, 401, 501) provided in the vehicle based on an instruction of the key operation signal,
wherein the mobile terminal (M) is configured to:
have a screen region (Dupp, Da) capable of receiving an operation by an occupant and displaying an operation button (Bc) that prompts output of the key operation signal from the mobile terminal (M);
differentiate a display in the screen region (Dupp, Da) between when the mobile terminal (M) is located in a first area (A2) within a first distance from the vehicle and when the mobile terminal (M) is located outside of the first area (A2); and
display the operation button (Bc) in the screen region (Dupp, Da) when the mobile terminal (M) is located in the first area (A2).

2. The electronic key system (1) for a vehicle according to claim 1, wherein the mobile terminal (M) is configured to cease displaying the operation button (Bc) in the screen region (Dupp, Da) when the mobile terminal (M) is located outside of the first area (A2).

3. The electronic key system (1) for a vehicle according to claim 1 or 2, wherein the electric component is an electric component (301) involved with turning on and off of a power supply provided in the vehicle.

4. The electronic key system (1) for a vehicle according to claim 3, wherein the controller (101) is configured to start the vehicle in response to the power supply being turned on.

5. The electronic key system (1) for a vehicle according to any one of claims 1 to 4, wherein the mobile terminal (M) is configured to:
display a first operation button (Bc) and a second operation button (Ba1, Ba2) as the operation button, the first operation button (Bc) being an operation button that prompts output of a key operation signal concerning turning on and off of a power supply provided in the vehicle, the second operation button (Ba1, Ba2) being an operation button that prompts output of a key operation signal concerning an operation of the electric component (501) other than the power supply,
switch the display in the screen region (Dupp, Da) between when the mobile terminal (M) is located in the first area (A2) and when the mobile terminal (M) is located in a second area (A1) that is outside of the first area (A2) and within a second distance greater than the first distance from the vehicle, and
display both the first operation button (Bc) and the second operation button (Ba1, Ba2) when the mobile terminal (M) is located in the first area (A2), and display only the second operation button (Ba1, Ba2) of the first operation button and the second operation button when the mobile terminal (M) is located in the second area (A1).

6. The electronic key system (1) for a vehicle according to claim 5, wherein the mobile terminal (M) is configured to switch display of the screen region (Dupp, Da) including the second operation button (Ba1, Ba2) to a foreground when the mobile terminal (M) moves from outside the second area (A1) into the second area (A1).

7. The electronic key system (1) for a vehicle according to claim 5 or 6, wherein the electric component (501) other than the power supply includes a door lock actuator involved with locking or unlocking of a door of the vehicle.

8. The electronic key system (1) for a vehicle according to any one of claims 1 to 7, wherein the mobile terminal (M) is configured to:
become capable of outputting the key operation signal under authorization concerning an operation of the electric component (301), upon obtaining the authorization ; and
cease displaying the operation button (Bc) in the screen region (Dupp, Da) when the mobile terminal (M) has obtained the authorization and is located outside of the first area (A2).

9. The electronic key system (1) for a vehicle according to any one of claims 1 to 8, wherein the mobile terminal (M) is configured to:
become capable of outputting the key operation signal under authorization concerning an operation of the electric component (301), upon obtaining the authorization; and
in the first area (A2), provide a display that prompts the occupant to obtain the authorization when the mobile terminal (M) has not obtained the authorization, and display the operation button (Bc) in the screen region (Dupp, Da) when the mobile terminal (M) has obtained the authorization.

10. The electronic key system (1) for a vehicle according to any one of claims 1 to 9, wherein the vehicle comprises:
a receiver (C) that receives the key operation signal; and
a signal transmitter (C), and
the mobile terminal (M) is configured to detect a reception intensity of a signal transmitted from the signal transmitter (C) and determine whether the mobile terminal (M) is located in the first area (A2) based on the detected reception intensity.

11. The electronic key system (1) for a vehicle according to claim 10, wherein the mobile terminal (M) is configured to:
become capable of outputting the key operation signal under authorization concerning an operation of the electric component (301), upon obtaining the authorization; and
provide a display that prompts the occupant to perform an operation of bringing the mobile terminal (M) close to the receiver (C) when the mobile terminal (M) is located outside of the first area (A2) after obtaining the authorization.
